Europäisches Patentamt

European Patent Office

Office européen des brevets

(11) Publication number: **0 462 433 A2**

# EUROPEAN PATENT APPLICATION

(21) Application number: 91108892.0

(22) Date of filing: 31.05.91

(51) Int. Cl.⁵: **C08L 23/02**, //(C08L23/02, 53:00)

(30) Priority: 31.05.90 IT 2049790

(43) Date of publication of application:
27.12.91 Bulletin 91/52

(84) Designated Contracting States:
BE DE DK ES FR GB IT NL SE

(71) Applicant: **Himont Incorporated**
**2801 Centerville Road**
**New Castle County Delaware(US)**

(72) Inventor: **Fayt, Roger Michel**
**Route du Condroz 144**
**B4121 Neuville-en-Condroz(BE)**
Inventor: **Teyssie, Philippe Jules**
**Avenue du Bois Impérial de Rognac 85**
**B-4121 Neuville-en-Condroz(BE)**
Inventor: **Zerega, Francesco**
**34, Via Cappelletta**
**I-21056 Induno Olona, Varese(IT)**
Inventor: **Cecchin, Giuliano**
**2, Via Ugo Foscolo**
**I-44100 Ferrara(IT)**

(74) Representative: **Zumstein, Fritz, Dr. et al**
**Dr. F. Zumstein Dipl.-Ing. F. Klingseisen**
**Bräuhausstrasse 4**
**W-8000 München 2(DE)**

(54) **Paintable polyolefin compositions.**

(57) A paintable polyolefin composition comprising:

A) 70-99 parts by weight of an olefin polymer selected from the group consisting of homopolymers of ethylene, propylene, butene-1 or 4-methyl-pentene-1, and crystalline or amorphous copolymers of said olefins with one or more different $CH_2 = CHR$ olefins, where R is hydrogen or an alkyl radical with 1-10 carbon atoms, and mixtures thereof

B) 1-30 parts by weight of an X-Y block copolymer, where X is a polydiene, optionally partially or totally hydrogenated, and Y is a $CH_2 = CR-COOR'$ acrylic or methacrylic acid ester polymer or copolymer, where R is hydrogen or methyl and R' is a linear or branched $c_{1-18}$ alkyl, $C_{3-18}$ cycloalkyl or $C_{6-18}$ aryl radical, the number average molecular weight of said copolymer being from 1,000 to 200,000 g/mole, and the content of acrylic or methacrylic ester polymer or copolymer being from 1 to 70% by weight.

EP 0 462 433 A2

The present invention relates to paintable polyolefin compositions with increased surface tension, which are particularly suitable for painting after having been treated with ultraviolet radiation.

The capacity of polymer materials to adhere to inks, paints, adhesives, etc. and display antistatic properties, hinges, essentially, on the polarity of their surface.

Generally, polyolefins have a low surface tension, and therefore require more or less complicated treatments, usually carried out on the surface of the preformed product, in order to be suitable for applications such as painting, inking, or adhesion to other substrata.

Among the possible known methods for increasing the polarity of polyolefins, the ones most typically used in the industry are: flame treating, followed by the optional application of adequate primers, plasma or corona discharge treatment, application of oxidants, or ultraviolet radiation treatment in the presence of photoactivators or photosensitive materials, generally selected among chlorinated hydrocarbons.

Each one of these methods, however, is unsatisfactory either for technical or for economic reasons.

Flame treating, for example, is a process which is relatively economic, but is not adequate for products with a complex form; plasma treatment requires high investment and business costs; ultraviolet radiation treatment requires the use of a considerable quantity of solvents for the application of the photoactivator or the photosensitive material on the surface of the product, with subsequent safety and environmental problems.

Therefore, it would be of great technical and economical interest if a polyolefin material were available, whose surface had a concentration of polar groups which would allow sufficient adhesion to, for example, paints or adhesives without having to carry out onerous post-treatments. In this respect, mixing the polyolefin polymer with polar polymers represents, in principle, a very attractive possibility. However, it has been found that mixing low surface energy polymers with polar polymers, inevitably creates compositions whose surface is covered by the component with the lowest surface tension (see, for example, Paul & Neuman: Polymer blends, Vol. 1, Academic Press N.Y. 1975).

Presently, there is no teaching or suggestion in the prior art that a polar polymer could migrate to the surface of a polyolefin material thus increasing the polarity.

This invention provides a way to increase the surface tension of olefin polymers and copolymers by mixing them, in the liquid state, with small quantities of specific block copolymers having suitable molecular characteristics. The products obtained from said compositions have a surface tension sufficiently elevated, higher than 30 din/cm., and can be painted by means of a simple treatment with ultraviolet radiation.

The present invention embodies the above mentioned polyolefin compositions with a surface tension increased by their method of preparation and painted products obtained from said compositions.

The preparation method includes mixing in the liquid state a composition of:

A) 70-99 parts by weight, preferably 80-95 parts by weight, of an olefin polymer selected from the group consisting of ethylene, propylene, butene-1 and 4-methyl-pentene homopolymers, crystalline or amorphous copolymers of said olefins with one or more different $CH_2 = CHR$ olefins, where R is hydrogen or an alkyl radical with 1-10 carbon atoms, wherein the amorphous copolymers optionally comprise minor quantities of a diene; and mixtures thereof; and

B) 1-30 parts by weight, preferably 5-20 parts by weight, of an X-Y block copolymer, where X is a polydiene, optionally partially or totally hydrogenated, and Y is a $CH_2 = CR-COOR'$ acrylic or methacrylic acid ester polymer or copolymer, where R is hydrogen or methyl and R' is a linear or branched is $C_{1-18}$ alkyl, $C_{3-18}$ cycloalkyl, or $C_{6-18}$ aryl radical, optionally substituted with heteroatoms or groups containing heteroatoms.

Preferred examples of the polydiene group are 1,2-polybutadiene, 1,4-polybutadiene, 1,4-polyisoprene, 3,4-polyisoprene, and their hydrogenated derivatives; suitable examples of the acrylic or methacrylic polymer or copolymer block include polymethylmethacrylate, poly-n-butyl acrylate, poly-ter-butyl-acrylate, poly-tert-butyl methacrylate, polystearyl methacrylate, poly-trifluoroethyl methacrylate, polycyclohexyl methacrylate, polyphenyl methacrylate, polyglycidyl methacrylate and polyallyl methacrylate.

Preferably, the polydiene block is a polyisoprene block, and the acrylic or methacrylic polymer block is polymethyl methacrylate. The number average molecular weight of the block copolymer is usually from 1,000 to 200,000 g/mole, preferably from 5,000 to 100,000 g/mole, while its acrylic or methacrylic polymer or copolymer content is from 1% to 70% by weight, preferably from 5% to 50%.

The block copolymers can be easily synthesized by anionic means following general methods well known by those skilled in the art, as described in the examples of the present application.

Olefin polymers or copolymers which can be used, preferably comprise polypropylene with a high isotactic index (higher than 90%), HDPE, LLDPE, LDPE polyethylene, propylene crystalline copolymers with minor proportions of ethylene and/or other α-olefins, elastomeric copolymers of ethylene with propylene and/or 1-butene optionally containing minor proportions of a diene; polybutene-1 or poly-4-methylpentene-1.

Said polymers can also be used mixed with each other and/or other polymers, such as, for example, polypropylene and polystyrene mixtures.

The preparation of compositions of the invention by mixing polyolefin and block copolymer in the liquid state, can be carried out in Bambury or Brabender type internal mixers, roller mixers or extruders. Temperature and mixing time are not crucial as long as an adequate plastification and homogenization of the system are obtained. As an example, in the case of propylene one can use a temperature of from 180 to 250°C and mixing times of from 30 seconds to 10 minutes.

The molding of said mixtures is also not critical; in fact one can use the cycles and molding temperatures typically used in the industry.

Ultraviolet radiation treatment of the surface of products to be painted is carried out according to known methods. For example, one can use apparatus and methods described in published European patent application n. 0 344 756.

Paintable compositions can contain mineral fillers, nucleating agents, pigments or other additives normally added to polyolefins. The painted products obtained from the compositions of the invention are characterized by good adhesion of the paint to the substratum. Said compositions are particularly adequate for the preparation of painted bumpers.

The following examples are given in order to illustrate and not limit the invention.

The methods for preparing the block copolymers used in the examples, the preparation and molding of polyolefin/block copolymer mixtures and the method used for treating the plaques with U.V. radiation are reported below.

a) Methods for the preparation and characterization of polydiene-polyalkyl methacrylate block copolymers.

The syntheses are carried out in a single neck glass flask, equipped with rubber membrane for the introduction of solvent and reagent with a syringe or capillary tube, previously heated under vacuum and filled with dry nitrogen. The reaction mixture is stirred with magnetic anchor.

1,4-polyisoprene-polymethyl methacrylate copolymer

900 ml of benzene and 0.3 ml of styrene previously dried on $CaH_2$ and freshly distilled, are introduced in a 4 liter flask.

The impurities which may be present in the system are eliminated by adding, drop by drop, a sec-butyllithium hexane solution until a persistent yellow coloration appears. Then are added, in order, 1•70x10$^{-2}$ moles of sec-butyllithium and 140 g of isoprene, previously dried at low temperature on n-butyllithium and distilled. The isoprene is allowed to react at 30°C for 12 hours under agitation. (A sample of the polyisoprene thus obtained is taken to conduct an analytical characterization).

75 ml (2.5x10$^{-2}$ moles) of a toluene solution at 6.25% diphynylethylene and 2.5 liters tetrahydrofuran, previously refluxed on Na-benzophenone complex and freshly distilled, are then added to the mixture obtained above.

The temperature of the reaction mixture is then brought to -78°C with a dry ice/acetone bath, and 60 g of methyl methacrylate previously dried on $CaH_2$, distilled, passed on triethylaluminum and freshly redistilled, are added at said temperature.

Copolymerization of the methyl methacrylate is continued for 2 hours at 78°C. After the reaction is terminated by adding a few drops of methanol, the copolymer is recovered by precipitation in methanol, and it has a yield which is practically quantitative. The number average molecular weight of the polyisoprenic block (PIP), taken from the reaction medium before the addition of methyl methacrylate, is determined in tetrahydrofuran at 30°C by means of GPC (Waters apparatus model 201, equipped with columns filled with 100, 500, 1,000, 100,000 Å of Styrogel).

The number average molecular weight $M_n$ is calculated based on a calibration curve in relation to the polystyrene (PS) according to relation: $M_n$ (PIP) = 0.8 $M_n$ (PS).

The number average molecular weight of the block copolymer is calculated based on the molecular weight of the polyisoprene block and the composition of the copolymer itself (since the yield is quantitative, the composition of the copolymer is equal to the one of the initial monomer mixture). Said composition is also confirmed by way of HNMR spectroscopy.

The microstructure of the polyisoprene block prepared under these conditions is predominantly 1,4 (90%), while the polymethyl methacrylate block is predominantly syndiotactic (¹HNMR).

The polymerization conditions shown above produce a block copolymer having $M_n$ = 14,000 g/mole containing 30% by weight polymethyl methacrylate and 70% by weight polyisoprene.

Composition and number average molecular weight of the block copolymer depend on the composition of the monomer mixture and on the quantity of s-butyllithium which is fed.

Block copolymers containing 1,4-polybutadiene are synthesized according to the same procedure described above. In the case of block copolymers containing 3,4-polyisoprene or 1,2-polybutadiene, the polydiene block is synthesized in tetrahydrofuran at 0°C for 12 hours. Block copolymers containing other methacrylates are prepared according to the same procedure of the ones containing methyl methacrylate.

b) Preparation and molding of block polyolefin/copolymer mixtures.

Unless otherwise specified, the mixtures are prepared in a twin roller laboratory mixer at 200-210°C and 30 rpm for 5 minutes and molded in the form of 2 mm thick plaques by way of compression on aluminum foils at 230°C at 175 atm for 1 minute and rapid cooling at ambient temperature.

c) Measuring the surface tension of the plaques

The surface tension of the plaques is determined by using cellosolve-formamide mixtures according to ASTM D norm 2578-67.

d) Treating the plaques with U.V. radiation and painting them.

A lamp made by Società Aermeccanica Giardina I.S.T., model 200/1 is used to radiate the plaques. Said lamp is placed at a 20 cm distance from the surface of the sample. Exposure times are shown in the tables relative to the corresponding examples.

The irradiated plaques are painted by way of an aerograph using a paint made by Lechler which contains 46% by volume of Acriplast Bleu Zaffiro (Blue Sapphire) Met. 07384, 17% by volume of Polyacryl 00686 diluent and 26% by volume of Induritore (hardener) 09919).

After painting, the plaques are dried at ambient temperature for 10 minutes and then for 30 minutes at 89-90°C.

Adhesion of the paint is evaluated by way of cross cut test according to ISO norms 2409-1972 (E).

Before painting, the plaques may optionally be subjected to a degreasing treatment with solvents.

EXAMPLES

Examples 1-30 show the effect of the nature of X-Y block copolymer on the surface tension of polypropylene and block copolymer mixtures containing 20% copolymer by weight.

Tables I-II-III and IV refer to the following block copolymers respectively: 1,4-polyisoprene-polymethyl methacrylate (1,4 PIP-PMMA), 1,2-polybutadiene-polymethyl methacrylate (1,2 PBu-PMMA), 1,4-polybutadiene-polymethyl methacrylate (1,4 PBu-PMMA) and 3,4-polyisoprene-polymethyl methacrylate (3,4 PIP-PMMA).

Moplen D 505 polypropylene produced by HIMONT was used in all examples.

Table V shows surface tension data relative to a mixture between Moplen D 50S polypropylene and block copolymers comprising a polydiene and a polyalkyl (metha)acrylate different from polymethyl methacrylate.

Lastly, Tables VI and VII show surface tension and paintability data obtained starting respectively from polypropylene D 505 (Table VI) or (co) polymers different from polypropylene (Table VII). A 1,4-polyisoprene-polymethyl methacrylate block copolymer having $M_n = 14300$ g/mole and 30% by weight of polymethyl methacrylate has been used in the examples reported in Table VII.

4

TABLE I

EXAMPLES 1-13 AND COMPARATIVE EXAMPLE 1C

| EXAMPLE | X - Y BLOCK COPOLYMER | | MIXTURE SURFACE TENSION |
| NO. | $\overline{M}_n$ | % weight of Y | din/cm |
| --- | --- | --- | --- |
| 1 | 19,500 | 5 | 38 |
| 2 | 12,100 | 15 | 38 |
| 3 | 40,000 | 25 | 38 |
| 4 | 10,000 | 21 | 39 |
| 5 | 14,000 | 30 | 36-41 |
| 6 | 19,000 | 30 | 37-43 |
| 7 | 10,100 | 47 | 38 |
| 8 | 6,700 | 50 | 35 |
| 8b | 6,700[1] | 50[1] | 33-34 |
| 9 | 14,300 | 50 | 36-38 |
| 9b | 14,500[1] | 50[1] | 33-37-39 |
| 10 | 80,000 | 50 | 38 |
| 11 | 104,000 | 50 | 36 |
| 11b | 104,000[1] | 50[1] | 33-36 |
| 12 | 13,300 | 67 | 35 |
| 13 | 15,900 | 70 | 33 |
| 1C | --- | -- | 30[2] |

1) X = hydrogenated 1.4 - polyisoprene

2) 100% Moplen D 50S resin

5

EP 0 462 433 A2

TABLE II

EXAMPLES 14-17

| EXAMPLE NO. | X - Y BLOCK COPOLYMER | | MIXTURE SURFACE TENSION |
| | $\overline{M_n}$ | % WEIGHT OF Y | din/cm |
|---|---|---|---|
| 14 | 7,400 | 30 | 35 |
| 14b | 7,300[1] | 30[1] | 32 |
| 15 | 11,000 | 30 | 35-38 |
| 16 | 19,000 | 30 | 39 |
| 16b | 19,000[1] | 30[1] | 31-34 |
| 17 | 42,500 | 30 | 34-36 |

1) X = hydrogenated 1.2 polybutadiene

TABLE III

EXAMPLES 18-19

| EXAMPLE No. | X - Y BLOCK COPOLYMER | | MIXTURE SURFACE TENSION |
| | $\overline{M_n}$ | % WEIGHT OF Y | din/cm |
|---|---|---|---|
| 18 | 7,000 | 30 | 38 |
| 19 | 13,400 | 30 | 38 |

TABLE IV

EXAMPLES 20-21

| EXAMPLE NO. | X - Y BLOCK COPOLYMER | | MIXTURE SURFACE TENSION |
| | $\overline{M_n}$ | % WEIGHT OF Y | din/cm |
|---|---|---|---|
| 20 | 13,100 | 30 | 32-34 |
| 21 | 13,000 | 68 | 33-35 |

6

TABLE V

EXAMPLES 22-30

| EXAMPLE NO. | X - Y BLOCK COPOLYMER | | | | MIXTURE SURFACE TENSION din/cm |
|---|---|---|---|---|---|
| | $\overline{M}_n$ (g/m) | X (TYPE) | Y (type) | % WEIGHT OF Y | |
| 22 | 38,000 | 1,2 PBu | PtBA | 30 | 34-38 |
| 23 | 15,900 | 1,4 PIP | PGMA | 30 | 39-41-43 |
| 24 | 16,600 | 1,4 PIP | PAMA | 30 | 41 |
| 25 | 15,400 | 1,4 PIP | PTEMA | 30 | 31-37 |
| 26 | 14,300 | 1,4 PIP | PSMA | 30 | 33-34 |
| 27 | 3,500 | 1,2 PBu | PGMA | 15 | 33-37 |
| 28 | 4,300 | 1,4 PIP | PtBA | 23 | 37 |
| 29 | 12,000 | 1,4 PIP | PnBA | 30 | 38 |
| 30 | 12,000 | 1,4 PIP | PtBMA | 30 | 34-38 |

Y BLOCK CODE:

PtBA      = poly-tert-butyl-acrylate

PtBMA     = poly-tert-butyl methacrylate

PnBA      = poly-n-butyl-acrylate

PGMA      = poly-glycidyl methacrylate

PAMA      = polyallyl methacrylate

PTEMA     = poli-trifluoroethyl methacrylate

PSMA      = polystearyl methacrylate

PBn       = 1,2-polybutadiene

PIP       = 1,4-polyisoprene

EP 0 462 433 A2

TABLE VI

EXAMPLES 31-36 AND COMPARATIVE EXAMPLES 2C-3C

| EXAMPLE | X - Y BLOCK COPOLYMER | | | | | MIXTURE SURFACE TENSION | IRRADIATION TIME IN SECONDS | PAINTABILITY % |
|---|---|---|---|---|---|---|---|---|
| | % WEIGHT | $\overline{M}_n$ (g/mole) | X (TYPE) | Y (TYPE) | % WEIGHT OF Y | | | |
| 2C[1] | -- | -- | - | - | - | 30 | -- | 0 |
| 3C[1] | -- | -- | -- | - | - | 30 | 300 | 0 |
| 31 | 20 | 7,000 | 1.4 PBu | PMMA[2] | 30 | 36 | 300 | 100 |
| 32 | 20 | 12,000 | 1.4 PIP | PtBMA[3] | 30 | 36 | 30 | 100 |
| 33 | 20 | 16,900 | 1.2 PBu | PMMA | 30 | 36 | 300 | 100 |
| 34 | 20 | 10,400 | 1.4 PIP | PMMA | 30 | 36 | 60 | 100 |
| 35 | 20 | 10,400 | 1.4 PIP | PMMA | 30 | 36 | 300 | 100 |
| 36 | 10 | 19,300 | 1.4 PIP | PMMA | 5 | 36 | 300 | 100 |

1) 100% Moplen D 50 S resin
2) PMMA = polymethyl methacrylate
3) Poly-tert-butyl methacrylate

**TABLE VII**

**EXAMPLES 37-41**

| EXAMPLE NO. | POLYMER TYPE | MIXTURE SURFACE TENSION din/cm | IRRADIATION TIME IN SECONDS | PAINTABILITY % |
|---|---|---|---|---|
| 37 | ELTEX B 3925 High Density Polyethylene (Solvay) | 38 | 30 | 100 |
| 38 | ELTEX B 2015 High Density Polyethylene (Solvay) | 37 | 30 | 100 |
| 38b | ELTEX B 2015 High Density Polyethylene (Solvay) | 37 | 300 | 100 |
| 39 | SHELL 33 Low Density Polyethylene | 37 | 30 | 100 |
| 39b | SHELL 33 Low Density Polyethylene | 37 | 300 | 100 |
| 40 | AlKathene 45 Low Density Polyethylene (ICI) | 39 | 30 | 100 |
| 41 | TAFMER PO680 EPR Copolymer (Mitsui Petrochemical) | 35 | 30 | 100 |

## Claims

1. A paintable polyolefin composition comprising:

   A) 70-99 parts by weight of an olefin polymer selected from the group consisting of homopolymers of ethylene, propylene, butene-1 or 4-methyl-pentene-1, and crystalline or amorphous copolymers of said olefins with one or more different $CH_2 = CHR$ olefins, where R is hydrogen or an alkyl radical with 1-10 carbon atoms, wherein the amorphous copolymers optionally comprise minor quantities of a diene; and mixtures thereof

   B) 1-30 parts by weight of an X-Y block copolymer, where X is a polydiene, optionally partially or totally hydrogenated, and Y is a $CH_2 = CR\text{-}COOR'$ acrylic or methacrylic acid ester polymer or copolymer, where R is hydrogen or methyl and R' is a linear or branched $c_{1-18}$ alkyl, $c_{3-18}$ cycloalkyl or $C_{6-18}$ aryl radical, the number average molecular weight of said copolymer being from 1,000 to 200,000 g/mole, and the content of acrylic or methacrylic ester polymer or copolymer being from 1 to 70% by weight.

2. The composition of claim 1 where the olefin polymer is selected from the group consisting of high isotactc index polypropylene, HDPE, LLDPE, LDPE, propylene crystalline copolymers with minor proportions of ethylene and/or other $\alpha$-olefins; elastomeric copolymers of ethylene with propylene and/or 1-butene, optionally containing minor proportions of a diene; polybutene-1, poly-4-methylpentene-1 and mixtures thereof.

3. The composition of claim 1 or 2, where the X-Y block copolymer is a copolymer where block X is selected from the group consisting of 1,4-polyisoprene or 3,4-polyisoprene, 1,2-polybutadiene, or 1,4-polybutadiene, optionally partially or completely hydrogenated, and the polymer or copolymer which make up the Y block is present in quantities from 1 to 70% by weight of the block copolymer.

4. The composition of claim 1, where the Y block in the X-Y block copolymer is selected from the group consisting of polymethyl methacrylate, poly-n-butyl-acrylate, poly-tert-butyl-acrylate, poly-tert-butyl methacrylate, polystearyl methacrylate, polyglycidyl methacrylate, polyallyl methacrylate and poly-trifluoroethyl methacrylate.

5. The composition of claim 1 where the olefin polymer content is from 80 to 95 parts by weight, and the block copolymer content is from 5 to 20 parts by weight.

6. The composition of claim 1 where the number average molecular weight of the X-Y block copolymer is from 5,000 to 100,000 g/mole.

7. The composition of claim 1 having surface tension higher than 35 din/cm in the solid state.

8. Painted products obtained from the composition of claim 1.